# EUROPEAN PATENT SPECIFICATION

(11) **EP 2 285 087 B1**
(45) Date of publication and mention of the grant of the patent: **05.06.2019**
(21) Application number: 10170504.4
(22) Date of filing: 22.07.2010
(51) Int. Cl.: H04N 1/32, H04N 1/44

(54) **Image processing apparatus, method of controlling the same, and storage medium**
Bildverarbeitungsvorrichtung, Verfahren zur Steuerung davon und Speichermedium
Appareil de traitement d'images, procédé de contrôle associé, et support de stockage

(30) Priority: 03.08.2009 JP 2009180389
(43) Date of publication of application: 16.02.2011
(73) Proprietor: Canon Kabushiki Kaisha, Tokyo 146-8501 (JP)
(72) Inventor: IMAI, Yasuhiro, Ohta-ku Tokyo (JP)
(74) Representative: Hitching, Peter Matthew

(56) References cited:
- EP-A1- 1 971 126
- WO-A1-2008/086382
- WO-A1-2008/086383
- JP-A- 2008 023 736
- US-A1- 2008 079 990
- US-A1- 2008 180 747
- US-A1- 2009 174 901
- US-B1- 6 356 721

## Description

### BACKGROUND OF THE INVENTION

### Field of the Invention

The present invention relates to an image processing apparatus, a method of controlling the image processing apparatus, and a storage medium.

### Description of the Related Art

Conventionally, a quick response (QR) code functioning as copy restriction information, for example, is additionally printed on a print product to restrict the number of times a print product can be copied, thereby avoiding an increase in the number of print products.

Japanese Patent Application Laid-Open No. 2008-23736 discusses an image processing apparatus provided with a history print function of storing print data and a print setting of a print output job as a job execution history in a memory and performing reprint according to a user's instruction. Such an image processing apparatus is capable of effectively performing print based on the stored print data and print setting without the same print data being input again.

However, if the above history print function is used to enable re-execution of a print job in which copy restriction information is additionally printed on a print product without restriction, the effect of a copy protection function is nullified to increase print products. On the other hand, if the image processing apparatus with the history print function is configured such that printing using a job execution history cannot be uniformly made, the need of a user who wants to use the history print function cannot be met, reducing user-friendliness.

WO 2008/086382 discloses a document processing system which includes at least one document processing device for performing document processing jobs. A controller connected to the at least one document processing device is for recording job attribute usage history based upon document processing jobs performed by the at least one document processing device with a job attribute, and selectively restricting processing of new print jobs by the at least one document processing device with the job attribute based upon the recorded job attribute usage history exceeding a job attribute control threshold.

WO 2008/086383 discloses a document processing system including at least one document processing device for performing document processing jobs, and a controller connected to the at least one document processing device. The controller is for determining whether to restrict document processing jobs from being performed by the at least one document processing device with a job attribute based upon a job attribute control parameter. If a document processing job is to be restricted based upon the job attribute control parameter, the controller is also for determining whether to override the restriction based upon a job attribute override parameter different than the job attribute control parameter.
US 2008/180747 discloses an image forming device comprising:
a print unit; a print control unit configured to control the print unit in accordance with print target data to form an image corresponding to the print target data on a recording medium; a storage unit used to store the print target data which has been printed via the print unit; an authentication information input unit configured to accept input of authentication information; and
a judgement unit configured to judge whether to permit execution of reprinting of the print target data stored in the storage unit in accordance with the authentication information.

US 2008/079990 discloses a document processing device that scans a document and acquires from the document restricting information determining whether execution of processing relating to a document is permitted or restricted, that restrict further processing (e.g. printing/copying) according to the restricted information included therein (e.g. User permission and time-limit), and that embed said restricting information image into the subsequently printed version of the document.

### SUMMARY OF THE INVENTION

According to a first aspect of the present invention, there is provided an image processing apparatus as specified in claims 1 to 6. According to another aspect of the invention, there is provided a method as specified in claim 7. According to a further aspect of the invention, there is provided a program as specified in claim 8. Such a program can be provided by itself or carried by a carrier medium as specified in claim 9. The carrier medium may be a recording or other storage medium. The carrier medium may also be a transmission medium. The transmission medium may be a signal.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 is a block diagram illustrating a configuration of an image processing system.
Fig. 2 is a flow chart illustrating data processing in the image processing apparatus.
Fig. 3 is a schematic diagram illustrating an example of a user interface (UI) displayed on an operation unit.
Fig. 4 is a schematic diagram illustrating an example of a UI displayed on the operation unit.
Fig. 5 is a schematic diagram illustrating an example of a UI displayed on the operation unit.
Figs. 6A and 6B are schematic diagrams illustrating an example of UIs displayed on the operation unit.
Fig. 7 illustrates a memory map of a hard disk.
Figs. 8A and 8B are schematic diagrams illustrating copy processing in the image processing apparatus.
Fig. 9 is a flow chart illustrating data processing in the image processing apparatus.
Fig. 10 illustrates a job selection screen displayed on the operation unit.
Fig. 11 is a flow chart illustrating data processing in the image processing apparatus.

### DESCRIPTION OF THE EMBODIMENTS

Various exemplary embodiments, features, and aspects of the invention will be described in detail below with reference to the drawings.

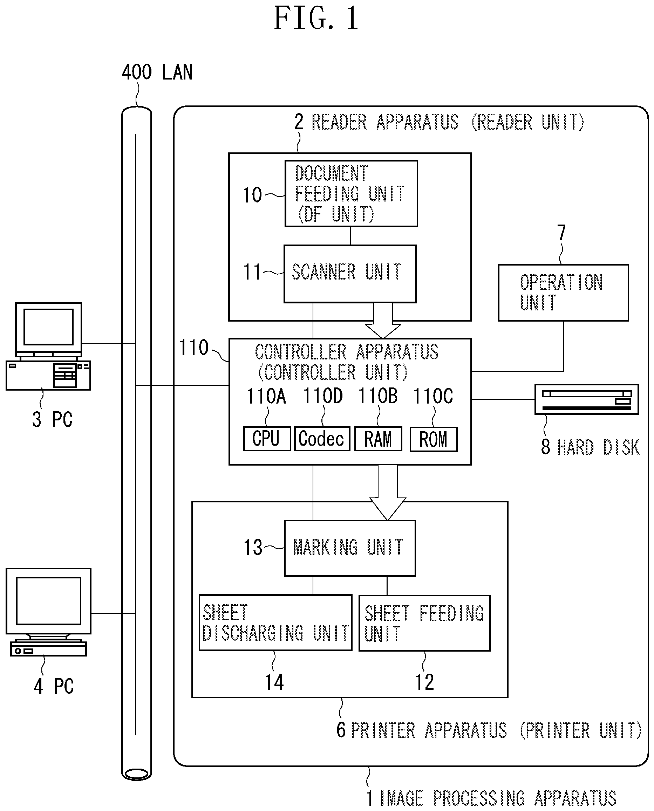

Fig. 1 is a block diagram illustrating a configuration of an image processing system including an image processing apparatus according to a first exemplary embodiment of the present invention. In the present exemplary embodiment, an image processing apparatus 1 communicates with information processing apparatuses (personal computers (PCs)) 3 and 4 via a local area network (LAN) 400 to process a print job. The image processing apparatus illustrates an example of a multifunction peripheral (MFP) capable of executing a print function, a box function, a scanner function, and a copy function.

In Fig. 1, the image processing apparatus 1 includes a reader apparatus 2 for reading an image data and a printer apparatus 6 for outputting an image data. The image processing apparatus 1 further includes an operation unit 7 provided with a keyboard for input and output operation and a liquid crystal panel for display and a hard disk 8 for storing control programs and image data. The image processing apparatus 1 still further includes a controller unit 110 which is formed of a single electronic component which is connected to each of the above components and controls the components. The hard disk 8 ensures a box region which is used for box function processing and stores print jobs received from the PC 3 or PC 4.

The reader apparatus 2 includes a document feeding unit 10 for conveying a document and a scanner unit 11 for optically reading an image on the document and converting it into image data as an electric signal. The printer apparatus 6 includes a sheet feeding unit 12 provided with a plurality of sheet cassettes for containing recording paper and a marking unit 13 for transferring and fixing the image data onto the recording paper. The printer apparatus 6 further includes a sheet discharging unit 14 for sorting and stapling the printed recording paper and discharging it to the outside.

The controller unit 110 which is formed of a single electronic component as described above has a function of converting the image data read by the reader apparatus 2 into a code. The controller unit 110 also has a scanner function of performing transmission to the PC 3 functioning as a first host computer or the PC 4 functioning as a second host computer via the LAN 400.

The image processing apparatus 1 has a printer function of converting the code data received from the PCs 3 or 4 via the LAN 400 into image data and outputting the image data to the printer apparatus 6 and other functions.

The controller unit 110 includes a central processing unit (CPU) 110A, a random access memory (RAM) 110B, a read-only memory (ROM) 110C, a coder decoder (Codec) 110D, a network controller for communication via the LAN 400, and an interface between the printer apparatus 6 and the reader apparatus 2. The CPU 110A loads a control program stored in the ROM 110C or the hard disk 8 onto the RAM 110B and executes it to realize various types of functional processing.

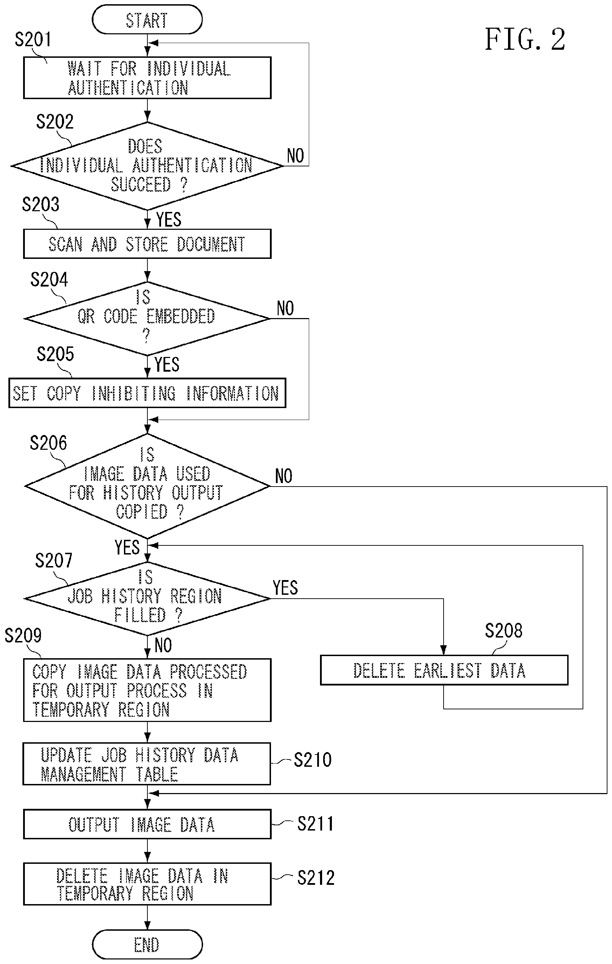

Fig. 2 is a flow chart illustrating data processing in the image processing apparatus according to the present exemplary embodiment. Job processing involving storage of the image data for history output is described with reference to the flow chart in Fig. 2. Each step illustrated in the flow chart is realized by the CPU 110A of the controller unit 110 illustrated in Fig. 1 loading the control program stored in the ROM 110C or the HDD 8 onto the RAM 110B and executing it.

In the present exemplary embodiment, a user operates the operation unit 7 to request the image processing apparatus to execute a copy job set so that copy inhibiting information is embedded (QR code embedding copy, for example) . Input image data may be scanning data and page description language (PDL) data, in the present exemplary embodiment, however, the scanning data read by the reader apparatus 2 is taken as the input image data.

The copy inhibiting information is embedded when the user performs setting related to copy through the operation unit 7 and may be a two-dimensional bar code such as a QR code or a dot pattern. In the present exemplary embodiment, a QR code embedding copy is set by the user.

In step S201, the CPU 110A performs display indicating that a reception of an individual authentication is waited via the operation unit 7. When individual authentication data is input by the user via the operation unit 7 (or an individual authentication apparatus connected to the outside), the processing proceeds to step S202. In step S202, the CPU 110A collates the individual authentication data input by the user with the individual authentication data in the hard disk 8 (or an outside management server) and confirms whether the authentication succeeds. If the CPU 110A determines that the individual authentication fails (NO in step S202), the processing returns to step S201. If the CPU 110A determines that the individual authentication succeeds (YES in step S202), the processing proceeds to step S203.

In step S203, the user issues an instruction to start reading of the document set on the reader apparatus 2 via the operation unit 7. According to the instruction, the CPU 110A causes the reader apparatus 2 to start reading of the document and the image data of the document is captured from the reader apparatus 2 via a scanner interface (I/F). The CPU 110A rasterizes the captured image data in the RAM 110B, compresses the image data in the Codec 110D and stores the compressed image data in the hard disk 8.

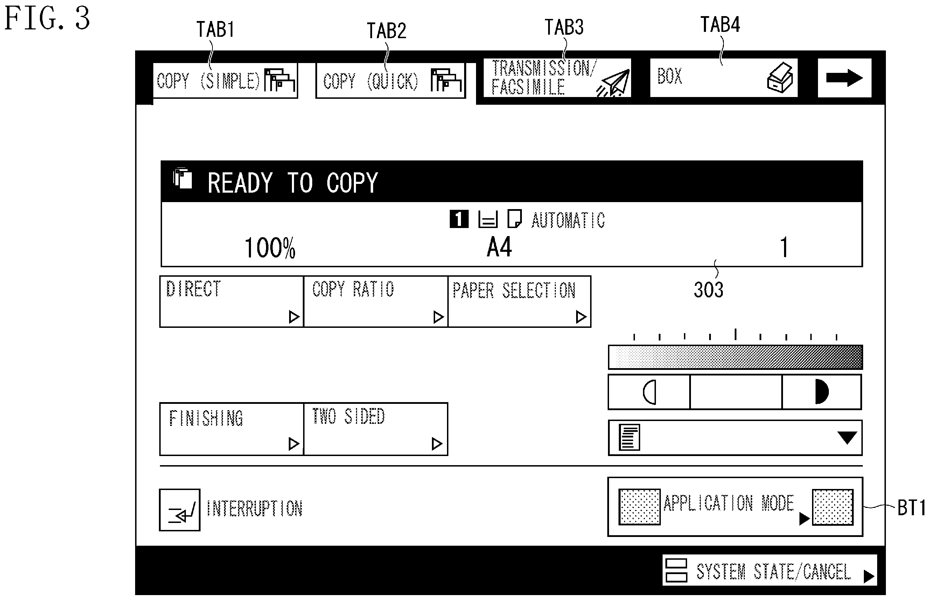

In step S204, the CPU 110A determines whether the user selects the embedding of a QR code via the operation unit 7. If the CPU 110A determines that the user does not select the embedding of the QR code (NO in step S204), the processing proceeds to step S206. On the other hand, if the CPU 110A determines that the user selects the embedding of the QR code (YES in step S204), the processing proceeds to step S205. The setting in which copying is performed with the QR code embedded is described below with reference to Figs. 3 to 5. In step S205, the CPU 110A causes the user to set embedding information and copy inhibiting information on operation screens illustrated in Figs. 3 to 5.

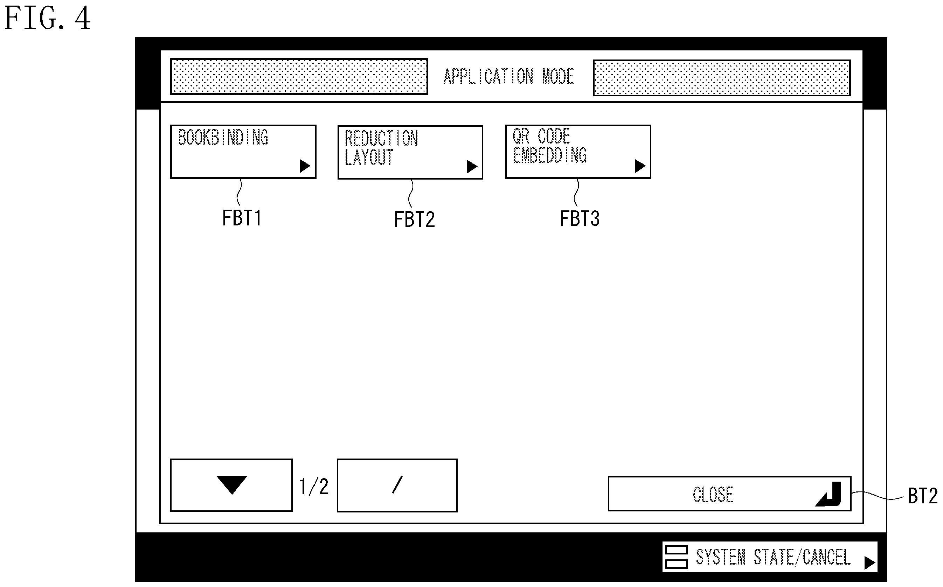

Figs. 3 to 5 illustrate examples of user interfaces displayed on the operation unit 7 in Fig. 1. Fig. 3 illustrates an ordinary copy screen in and image forming apparatus. In Fig. 3, functional tabs TAB1 to TAB4 are provided correspondingly with executable functions . A button BT1 is used to call setting screens corresponding to application modes. When the button BT1 is selected, the displayed screen in Fig. 3 is switched to the displayed screen in Fig. 4.

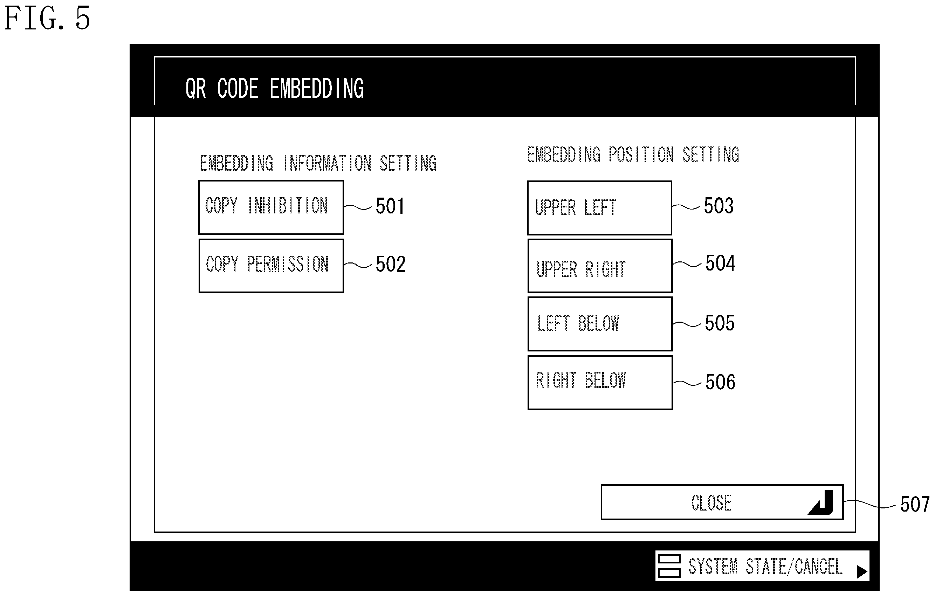

In Fig. 4, buttons FBT1 to FBT3 correspond to application modes. The button FBT1 is selected to set a bookbinding function. The button FBT2 is selected to set a reduction layout function. The button FBT3 is selected to set a QR embedding function. When the button FBT3 is selected, the displayed screen in Fig. 4 is switched to the displayed screen in Fig. 5.

In Fig. 5, buttons 501 and 502 are used to set an embedding attribute. The button 501 is selected to set an inhibition of further copying of a copied document (print product) output by executing a copy job. The button 502 is selected to set permission for further copying of a copied document (print product) output by executing a copy job under certain conditions.

The buttons 501 and 502 correspond to patterns based on their respective unique QR codes. Their respective patterns are formed at the time of scanning and printing the document. Buttons 503 to 506 are used to set a position in which the QR code is embedded. The buttons 503 to 506 determine where a pattern based on the QR code corresponding to each of the buttons 501 and 502 is embedded on the image data of the scanned document. The button 503 is used to select an upper left position of the image data of the scanned document (the position corresponds to an orientation and a size of a selected paper).

The button 504 is used to select an upper right position of the image data of the scanned document (the position corresponds to the orientation and the size of the selected paper) . The button 505 is used to select a left below position of the image data of the scanned document (the position corresponds to the orientation and the size of the selected paper).

The button 506 is used to select a right below position of the image data of the scanned document (the position corresponds to the orientation and the size of the selected paper). In step S205, the contents set by the user with reference to Figs. 3 to 5 are transmitted to the CPU 110A via an operation unit I/F and the setting information indicating the contents is stored in the RAM 110B.

The QR code includes two kinds of QR codes for setting a copy permission and a copy inhibition. The QR code described hereinafter refers to a "QR code for setting a copy inhibition" unless otherwise stated.

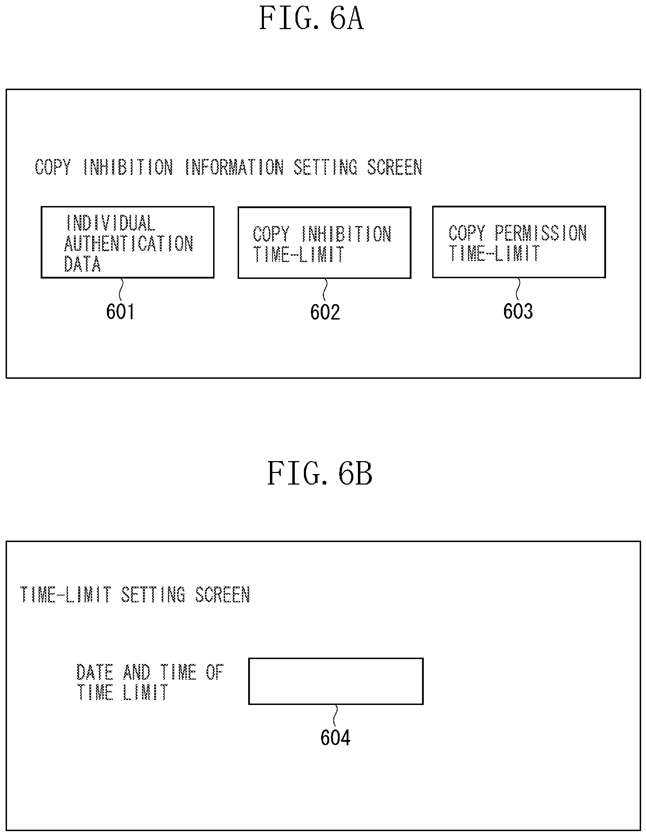

When the user selects "copy inhibition" as embedding information by using the button 501, information about individual authentication data, a copy inhibition time-limit, and a copy permission time-limit is set as copy inhibiting information. The setting of the copy inhibiting information is described below with reference to Figs. 6A and 6B.

Figs. 6A and 6B illustrate user interfaces displayed on the operation unit 7 in Fig. 1. Fig. 6A corresponds to a screen for setting the copy inhibiting information. Fig. 6B corresponds to a screen for setting a time limit. The screen illustrated in Fig. 6A is the one for setting the copy inhibiting information displayed on the operation unit 7 when the button 501 illustrated in Fig. 5 is pressed. A button 601 for setting a user's individual authentication data in which the copy inhibiting information is embedded is arranged on the screen for setting the copy inhibiting information illustrated in Fig. 6A.

A button 602 for setting a copy inhibition time-limit indicating until when copy is inhibited is also arranged thereon. Furthermore, a button 603 for setting a copy permission time-limit indicating until when copy is permitted and from when copy is inhibited is arranged thereon.

The individual authentication data may be any of authentication information of an identification (ID) card, biometric authentication information, or a password corresponding to a user. In the present exemplary embodiment, the password corresponding to the user is set as the individual authentication data. The individual authentication data may be set by a user when a job is executed or may be previously and automatically set in apparatus log-in data of an individual user.

Fig. 6B illustrates a screen displayed on the operation unit 7 when the buttons 602 or 603 illustrated in Fig. 6A is pressed. An input window 604 into which the date and time of time limit is set is arranged on the screen for setting a time limit illustrated in Fig. 6B. The user operates a ten key provided on the operation unit 7 to set the date and time of time limit. The time limit may be set by specifying a date or a period. The time limit may be set in units of hours, days, months, or years.

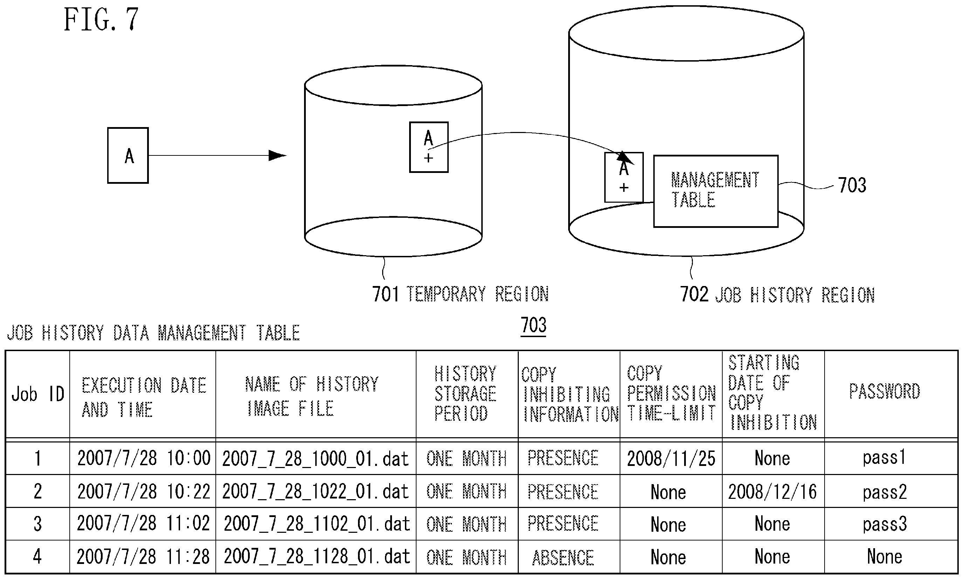

The time limit or the period set as the copy inhibiting information may be set by the user in units of jobs or previously set for the entire apparatus by the user or a system manager. A configuration of the hard disk 8 of the controller unit 110 is described below with reference to Fig. 7.

Fig. 7 illustrates a memory map of the hard disk 8 in Fig. 1. Fig. 7 illustrates only a portion which is related to the present invention extracted from a logical data region and includes a temporary region 701 and a job history region 702. The job history region 702 stores a job history data management table 703 and it is illustrated that image data A+ is stored therein. The temporary region 701 temporarily stores image data for output generated from the image data input by scan, for example, via image processing.

The temporary region 701 is the region from which the stored image data is read again and used when a plurality number of copies of the stored image data is printed. Image processing for generating the image data for output includes the one for inserting page numbers or changing an orientation of an image. If a job is normally ended or a system turns a power supply on/off, the image data in the temporary region 701 is asynchronously deleted by the system.

The job history region 702 is the region for storing the image data of an image output job which is once executed so that the image data can be output again after the image output job for outputting the image data is executed. The job history data management table 703 is described below.

The processing in step S206 and subsequent steps illustrated in the flow chart in Fig. 2 is described below. In step S206, the CPU 110A of the controller unit 110 checks whether the image data used is copied for history output. The term history output refers to a function of outputting image data using job history. The user can set whether the image data used for history output is copied via the operation unit 7 in advance. The setting may be in units of jobs or the system manager may perform the setting to the entire apparatus. Alternatively, the setting may be changed in units of users. Information as to whether image data used for history output is copied is stored in a region for the system (not shown in Fig. 7) on the hard disk 8.

If the CPU 110A determines that image data used for history output is not copied (NO in step S206), the processing proceeds to step S211 and the image data stored in the temporary region 701 is output via the printer apparatus 6. In step S212, the CPU 110A deletes the image data in the temporary region 701 of the hard disk 8 and the present processing is ended.

If the CPU 110A determines that image data used for history output is copied (YES in step S206), the CPU 110A advances the processing to step S207. In step S207, the CPU 110A determines whether the job history region 702 ensured in the hard disk 8 is filled.

If the CPU 110A determines that the job history region 702 is not filled (NO in step S207), the processing proceeds to step S209. On the other hand, if the CPU 110A determines that the job history region 702 is filled (YES in step S207), the processing proceeds to step S208.

In step S208, the CPU 110A refers to the execution date and time in the job history data management table in the job history region 702 and deletes the earliest job history data in the job history data. Then the processing returns to step S207. In step S207, the CPU 110A again determines whether the job history region 702 is filled.

In step S209, the CPU 110A copies the image data processed for output processing in the temporary region 701 as image data for the history output and the image data for history output is stored in the job history region 702. In the present exemplary embodiment, the image data subjected to the processing optimal for output is copied. Subjecting the image data to the processing optimal for output is merely an example, therefore the original data may be copied as it is.

In step S210, the CPU 110A updates relevant data in the job history data management table 703 as illustrated in Fig. 7. At this point, the CPU 110A registers the job execution date and time, a file name of the image data for the history output, the copy inhibiting information set in step S205, and so forth in the job history data management table 703.

The job history data management table 703 is configured to manage job IDs and file names of the image data for the history output. Further, the job history data management table 703 is configured to manage the job execution date and time and a storage period of job history. Furthermore, the job history data management table 703 is configured to manage presence or absence of setting of embedding copy of the QR code, i.e., the presence or absence of the copy inhibiting information. Other than that, types of a job, file names of original data, the number of output copies, user names who requested to execute jobs, and paper size used for print, which are not illustrated, are managed as job management data. The job history data management table 703 is also configured to manage the copy permission time-limit and the copy inhibition time-limit, and passwords as the copy inhibiting information.

If no information is set to each item in the job history data management table 703, "None" is set which signifies that no information is set. If no QR code embedding copy is set, "Absence" is set to the column of the copy inhibiting information in the job history data management table 703.

The job history data management table 703 may be stored anywhere in a nonvolatile memory region of the controller unit 110. In the present exemplary embodiment, the job history data management table 703 is stored in the hard disk 8.

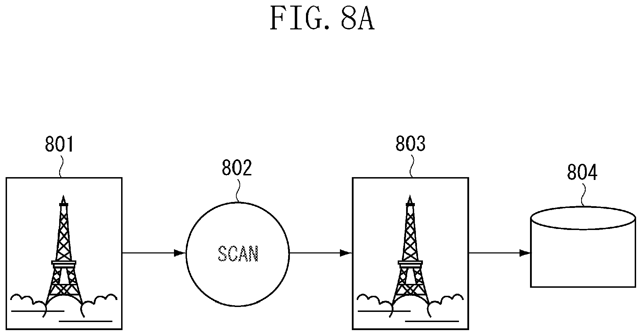

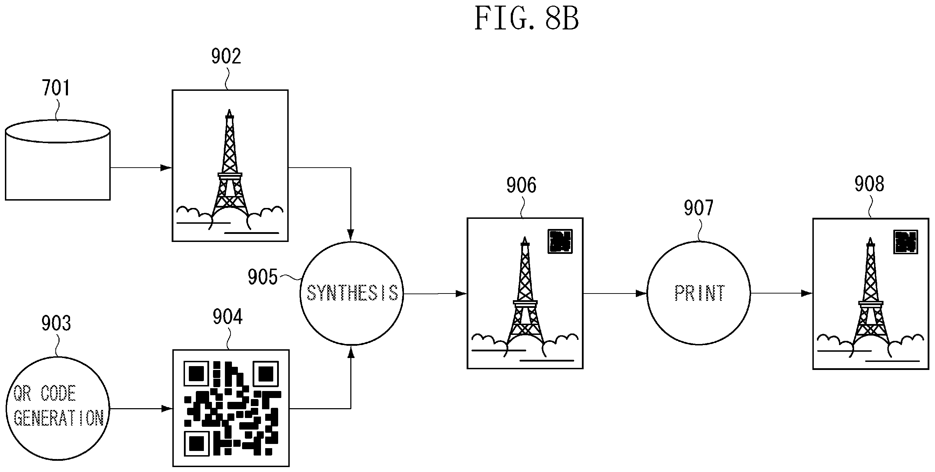

The processing for copying the image data from the temporary region 701 to the job history region 702 illustrated in Fig. 7 and the processing for updating the job history data management table 703 are described below with reference to Figs. 7, 8A, and 8B. As illustrated in Fig. 7, when image data A directly read from a document via the reader apparatus 2 is input, the CPU 110A stores the image data subjected to image processing in the temporary region 701 as image data A+ to output it from the printer apparatus 6.

The CPU 110A copies the image data A+ in the temporary region 701 to the job history region 702 as the image data for history output. After that, in the present exemplary embodiment, the job history data management table 703 ensured in the job history region 702 is updated.

In step S210, the CPU 110A updates the job history data management table 703. In step S211, the CPU 110A outputs the image data (the image data A+ in Fig. 7) via the printer apparatus 6. In step S212, the CPU 110A deletes the image data (the image data A+ in Fig. 7) from the temporary region 701. A print operation is described below.

First, the Codec 110D decompresses the image data stored in the hard disk 8 and reads into the RAM 110B. Then the CPU 110A executes processing such as orienting or rotating the image data to fit the printer apparatus 6, inserting page numbers set by the user, and synthesizing the QR code. The processed image data is stored in the temporary region 701 of the hard disk 8. The image data stored in the temporary region 701 of the hard disk 8 is again rasterized in the RAM 110B, transmitted to the printer apparatus 6 via the printer I/F, and printed therein.

A copy operation in which the QR code is synthesized and image data is printed by the printer apparatus 6 is described in detail below. The user performs setting for embedding the QR code using the user interface illustrated in Fig. 5 and displayed on the operation unit 7 illustrated in Fig. 1. In this case, the user selects the button 501 to set "copy inhibition" as embedding information and selects the button 504 to select "upper right" as an embedding position.

Figs. 8A and 8B are schematic diagrams illustrating data processing in the image processing apparatus according to the present exemplary embodiment. The processing in which print is performed with the QR code embedded in the image data of the scanned document is described in detail below. Fig. 8A illustrates the flow of data in scanning a document. Fig. 8B illustrates the flow of data in printing the scanned image data by the printer apparatus 6.

In Fig. 8A, a copy document 801 is set on the reader apparatus 2. The user operates the button to call a QR code embedding setting screen illustrated in Fig. 5 from the screen illustrated in Fig. 3 and displayed on the operation unit 7. Scan processing 802 indicates a state where the scanner unit 11 is reading the copy document 801. Image data 803 of the read document is stored in the temporary region 701 of the hard disk 8.

In Fig. 8B, a QR code is generated in QR code generation processing 903 and image data 902 and a generated QR code 904 are synthesized in synthesis processing 905. The synthesis processing 905 is performed by the CPU 110A using the RAM 110B. In Fig. 8, a synthesized image data 906 is generated by the synthesis processing 905, and a copy output 908 is output by printing processing 907.

The user selects the button 501 in the user interface illustrated in Fig. 5 and displayed on the operation unit 7 to set "copy inhibition" as embedding information and selects the button 504. The user issues an instruction to start reading (by pressing the start button) from the operation unit 7 with "upper right" selected as the embedding position.

The CPU 110A instructs the scanner unit 11 of the reader apparatus 2 to read the document. The scanner unit 11 receives the instruction and reads the document. The read image data 803 is rasterized in the RAM 110B and written in the temporary region 701 of the hard disk 8, thereby the processing in the scanner is ended. The processing for print is described below with reference to Fig. 8B.

The image data stored in the hard disk 8 (the temporary region 701 illustrated in Fig. 8B) is read to the RAM 110B. On the other hand, in the QR code generation processing 903, the user operates the button 501 in Fig. 5 to cause the CPU 110A to generate the QR code on the RAM 110B from information of "copy inhibition" selected as the embedding information.

In the synthesis processing 905, the CPU 110A performs an image synthesis on the RAM 110B in which the QR code is put on the upper right position corresponding to the button 504 selected as the embedding position by the user. The synthesized image data 906 is stored in the temporary region 701 of the hard disk 8.

The CPU 110A rasterizes the synthesized image data stored in the hard disk 8 again in the RAM 110B and transmits the image data to the printer apparatus 6. The printer apparatus 6 prints on paper based on the image data. Thus, the output result 908 in which the QR code is embedded can be acquired.

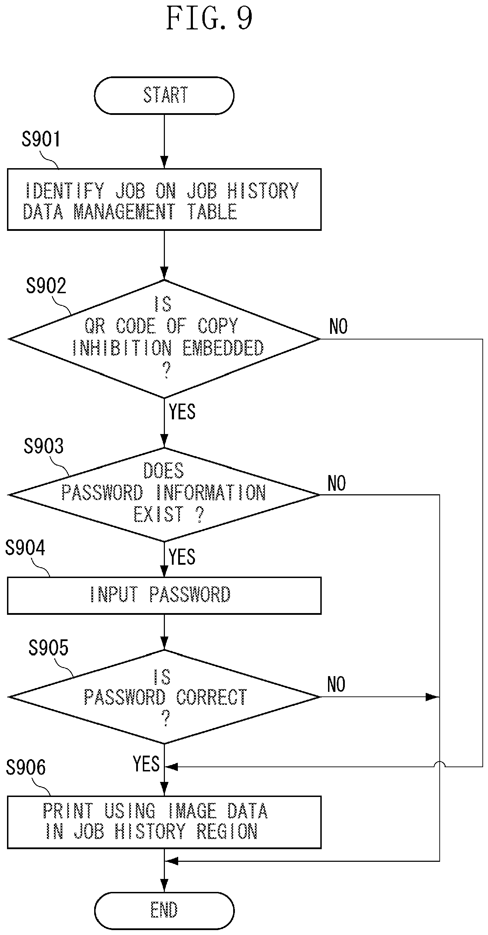

Fig. 9 is a flow chart illustrating data processing in the image processing apparatus according to the present exemplary embodiment. Re-output processing of the image data using job history data is described below with reference to the flow chart in Fig. 9. Each step illustrated in the flow chart is realized by the CPU 110A of the controller unit 110 illustrated in Fig. 1 loading the control program stored in the ROM 110C or the HDD 8 onto the RAM 110B and executing it.

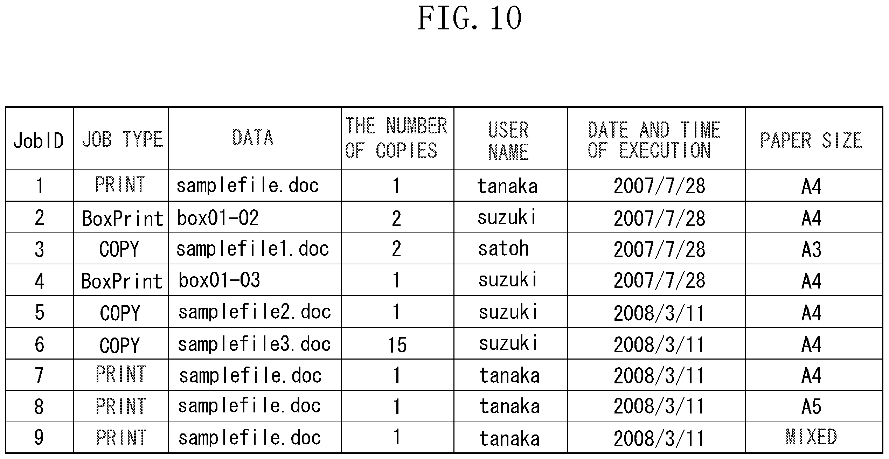

In step S901, the user calls the job history data from the job history data management table illustrated in Fig. 7 via the operation unit 7 and causes the operation unit 7 to display a job list illustrated as an example in Fig. 10. The operation unit 7 displays the job list including jobs the re-output of which is inhibited and not inhibited.

Although Fig. 10 illustrates an example displaying job IDs, job types, file names of original data, the number of copies, user names, execution date and time, and paper sizes, contents to be displayed are not limited to the above ones.

The user selects a re-output job from the job list illustrated in Fig. 10 using the button of the operation unit 7. The CPU 110A identifies the job management data of the job selected by the user on the job history data management table 703.

In step S902, the CPU 110A uses the identified job management data to determine whether the QR code of copy inhibition is embedded in the job. If the CPU 110A determines that the QR code of copy inhibition is embedded (YES in step S902), the processing proceeds to step S903. If the CPU 110A determines that the QR code of copy inhibition is not embedded (NO in step S902), the processing proceeds to step S906.

In step S903, the CPU 110A determines whether individual authentication data (in the present exemplary embodiment, password information) is included in the identified job management data. In the present exemplary embodiment, if the CPU 110A determines that password information is not included (NO in step S903), the CPU 110A ends the processing as it is without re-outputting the job. If the CPU 110A determines that password information is included (YES in step S903), the processing proceeds to step S904 to request the user to input a password via the operation unit 7.

In step S905, the CPU 110A determines whether the password input by the user from the operation unit 7 corresponds to the password information in the job history data. If the CPU 110A determines that the input password does not correspond to the password information in the job history data (NO in step S905) because the password is incorrect, the present processing is ended.

If the CPU 110A determines that the input password corresponds to the password information in the job history data (YES in step S905), the processing proceeds to step S906. In step S906, the CPU 110A decompresses the image data of corresponding job by the Codec 110D from job history region 702 in the hard disk 8 and reads into the RAM 110B. The CPU 110A transmits the image data to the printer apparatus 6 via the printer I/F to cause the printer apparatus 6 to print it and ends the present processing.

According to the present exemplary embodiment, the user can confirm the stored job list without particular regard to whether the re-output is restricted or not. If the user selects a job and the CPU 110A confirms that the selected job is the job whose re-output is restricted, the CPU 110A requests the user who selected the job to input authentication information. Therefore, even if an unidentified user selects a job from the job list, if the re-output of the selected job is restricted, the stored job can be prevented from being re-output unless the input authentication information corresponds.

If the user selects a job whose re-output is not restricted, the user can output without performing the authentication processing for the selected job. In other words, according to the present exemplary embodiment, a burden on the user's operation in executing a job can be reduced compared with the one in a system uniformly subjecting each of jobs to authentication processing and a job whose re-output is restricted can be prevented from being re-output without any restriction.

This allows freely performing a job management in which the execution of re-output processing is restricted or permitted along with copy restriction information set by the user when the document is scanned to register the image data.

Accordingly, reduction in security because of increase in print products without any restriction owing to re-output processing can be minimized without losing user's convenience while the history of image data of the stored document is being managed.

In the first exemplary embodiment, a method for executing the re-output of a job including the copy inhibiting information is described as a method for re-outputting from job history. More specifically, an example is described in which individual authentication is again requested at the time of the re-output of the job including the copy inhibiting information to improve security.

In a second exemplary embodiment, the job history data management table 703 stored in the job history region 702 and an image data processing are described. As described above, the job history data management table 703 manages the job execution date and time, a history storage period, copy inhibition time-limit, and copy permission time-limit. Described below is an example where the job history data management table 703 and a state of stored image data are changed based on the above described information. In the description of the first exemplary embodiment, both of the copy inhibition time-limit and the copy permission time-limit may be set or either of them may be set. In the description of the present exemplary embodiment, however, an example is described in which either one of them is set.

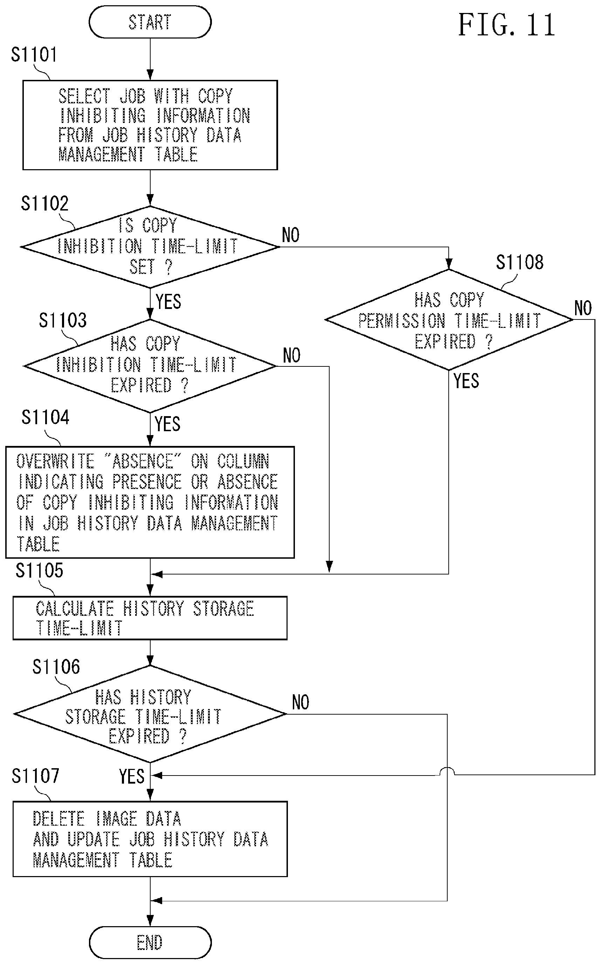

Fig. 11 is a flow chart illustrating data processing in the image processing apparatus according to the present exemplary embodiment. Change processing of job history data is described below with reference to the flow chart in Fig. 11. Each step illustrated in the flow chart is realized by the CPU 110A of the controller unit 110 illustrated in Fig. 1 loading the control program stored in the ROM 110C or the HDD 8 onto the RAM 110B and executing it.

In step S1101, the CPU 110A automatically selects the job with the copy inhibiting information (the above described QR code for setting copy inhibition in the present exemplary embodiment) on the job history data management table 703. The job may be selected when the user executes again a history job or may be automatically periodically selected by the image processing apparatus. In the present exemplary embodiment, the image processing apparatus periodically detects the job with the copy inhibiting information from all the jobs and automatically selects it.

In step S1102, the CPU 110A determines whether any value is set in the copy inhibition time-limit managed in the job history data management table 703. If the CPU 110A determines that the copy inhibition time-limit is not set ("None" is set) (NO in step S1102), the processing proceeds to step S1108. If the CPU 110A determines that the copy inhibition time-limit is set (YES in step S1102), the processing proceeds to step S1103.

In step S1103, the CPU 110A determines whether the current date and time information managed by the system has expired the copy inhibition time-limit. If the CPU 110A determines that the current date and time information has not expired the copy inhibition time-limit (NO in step S1103), the processing proceeds to step S1105. If the CPU 110A determines that the current date and time information has expired the copy inhibition time-limit (YES in step S1103), the processing proceeds to step S1104.

In step S1104, information in the job history data management table 703 is set to be printable to cancel a print inhibition because of the expiration of the copy inhibition time-limit. More specifically, the print inhibition is cancelled by overwriting "Absence" on the column indicating the presence or absence of the copy inhibiting information in the job history data management table 703 stored in the hard disk 8. Alternatively, the QR code itself may be deleted from the image data in the job history region 702 or print inhibition may be cancelled by processing equivalent to the above ones.

In the present exemplary embodiment, in step S1104, "Absence" is set on the column indicating the presence or absence of the copy inhibiting information in the job history data management table 703.

In step S1108, the CPU 110A determines whether the current date and time information managed by the system has expired the copy permission time-limit managed in the job history data management table 703. If the CPU 110A determines that the current date and time information has expired the copy permission time-limit (YES in step S1108), the processing proceeds to step S1105. If the CPU 110A determines that the current date and time information has not expired the copy permission time-limit (NO in step S1108), the processing proceeds to step S1107. In step S1107, the CPU 110A deletes the image data from the job history region 702 of the hard disk 8 and ends the present processing.

In step S1105, the CPU 110A calculates a history storage time-limit. The history storage time-limit is calculated by the CPU 110A using the copy inhibition time-limit, the history storage period, and the job execution date and time managed in the job history data management table 703.

If the copy inhibition time-limit and the history storage period are set in the job history data management table 703, the history storage time-limit is "date and time determined by adding the history storage period to the date and time of the copy inhibition time-limit."

If the copy inhibition time-limit is not set, but the history storage period is set, the history storage time-limit is "date and time determined by adding the history storage period to the job execution date and time. " In the case, except for the above, the history storage time-limit is not set in particular.

The history storage time-limit calculated in step S1105 may be added as information to the job history data management table 703 or may be calculated every time a storage state is changed. In step S1106, the CPU 110A compares information about the current date and time managed by the system with the above history storage time-limit to determine whether the current date and time has expired the history storage time-limit. If the CPU 110A determine that the current date and time has not expired the history storage time-limit (NO in step S1106), the present processing is ended.

If the CPU 110A determine that the current date and time has expired the history storage time-limit (YES in step S1106), then in step S1107, the CPU 110A deletes the image data of the corresponding job in the job history region 702 of the hard disk 8. The CPU 110A also deletes the job history data of the corresponding job from the job history data management table 703 and ends the present processing. The execution of the above processing allows the deletion of history data at timing when the convenience of history storage is not lost with security maintained.

In a third exemplary embodiment, processing is described in which a print product with copy restriction information for restring the number of times of copy is printed by the image processing apparatus 1.

A user can issue an instruction to embed number-of-times-of-copy restriction information for restricting the number of times of copy of print products to prevent increase in print products printed by the image processing apparatus 1 without any restriction. For example, a number-of-times-of-copy restriction button (not shown) may be provided on the screen illustrated in Fig. 5. When the number-of-times-of-copy restriction button is pressed, the image processing apparatus 1 requests the user to input the number of times of copy. When the image processing apparatus 1 is instructed to copy with the number of times of copy input, the image processing apparatus 1 prints image data including the number-of-times-of-copy restriction for restricting the number-of-times-of-copy on a sheet.

The image processing apparatus 1 stores the copy of the image data in the job history data management table 703 and thereafter allows executing the re-output of the job. The image processing apparatus 1 further manages a numeric value indicating the number of times of copy input by the user in association with the ID of the job in the job history data management table 703.

The image processing apparatus 1 receives an instruction to re-output the job from the user on the screen illustrated in Fig. 10. When the image processing apparatus 1 receives the instruction, the image processing apparatus 1 refers to the job history data management table 703 to determine whether the number of times of copy is stored in association with the job which the image processing apparatus 1 is instructed to re-output. If the number of times of copy is not stored in association with the job, the image processing apparatus 1 inhibits the re-output of the job.

If the number of times of copy is stored in association with the job, the image processing apparatus 1 refers to the number of times of copy of the job which the image processing apparatus 1 is instructed to re-output. If the number of times of copy is one or more, the image processing apparatus 1 executes the re-output according to the setting of the job which the apparatus 1 is instructed to re-output. The image processing apparatus 1 subtracts one from the stored number of times of copy and updates the number of times of copy associated with the job according to the result of the subtraction. For example, it is supposed that the image processing apparatus 1 embeds the number-of-times-of-copy restriction information in which copy is permitted ten times in the image data at the time of the first printing and performs printing. After that, if the user instructs the image processing apparatus 1 to re-output the job corresponding to the image data, the image processing apparatus 1 updates the number of times in which the re-output can be executed according to the job to nine times.

Such control allows preventing increase in image data of which the number of times of copy is restricted without any restriction through the re-output function of the image processing apparatus 1.

The image processing apparatus 1 may delete the image data included in the job from the job history region 702 when the number of times is zero. This effectively increases the free space of the job history region 702.

In the present exemplary embodiment, the example is described in which the image processing apparatus 1 inhibits the re-output of the job if the number of times of copy is stored without being associated with the job which the image processing apparatus 1 is instructed to re-output. However, the present exemplary embodiment is not limited to the above example. The image processing apparatus 1 may permit the re-output of the job if the number of times of copy is stored without being associated with the job which the image processing apparatus 1 is instructed to re-output. Alternatively, the user may set in advance whether to permit or inhibit the re-output of a job on the image processing apparatus 1 if the number of times of copy is stored without being associated with the job which the image processing apparatus 1 is instructed to re-output.

In the first exemplary embodiment, although the example is described in which individual authentication is requested at the time of re-outputting a job including copy inhibiting information to improve security, the re-output of the job including copy inhibiting information may be inhibited and the re-output of a job not including copy inhibiting information may be permitted. In the present exemplary embodiments, although the examples are described in which the image data read from the job history region is printed, the present invention can be applied to the case where the image data read from the job history region is transmitted.

For convenience of description, the above exemplary embodiments are separately described, however, the present invention may be realized by appropriately combining the above exemplary embodiments.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

## Claims

1. An image processing apparatus (1) comprising:
outputting means (6) configured to output an output product by executing a print job;
storing means (8) configured to store image data of the executed print job and job history information relating to the executed print job, wherein the job history information includes embedding management information indicating whether copy restriction information is embedded in the output product, and wherein the copy restriction information indicates whether copy from the output product is restricted;
display means (7) for displaying a list of previously executed print jobs based on the job history information stored in the storing means (8);
selecting means (7) for selecting at least one previously executed print job from the list of previously executed print jobs displayed on the display means (7);
determining means (110) for determining whether the embedding management information of the print job selected by the selecting means (7) indicates that the copy restriction information is embedded in the output product; and
control means (110) configured, if the determining means (110) determines that the embedding management information of the print job selected by the selecting means (7) indicates that the copy restriction information is embedded in the output product, to restrict the outputting means (6) from outputting an output product by re-executing the print job in accordance with the copy restriction information of the selected print job.

2. The image processing apparatus according to claim 1, further comprising,
receiving means (7) for receiving authentication information to be inputted by a user if the determining means (110) determines that the embedding management information of the print job selected by the selecting means (7) indicates that the copy restriction information is embedded in the output product,
wherein the control means (110) is configured, if the authentication information received by the receiving means (7) corresponds to authentication information included in the job history information associated with the print job selected by the selecting means (7), to restrict the image processing apparatus from outputting the output product in accordance with the copy restriction information of the selected print job.

3. The image processing apparatus according to claim 2, wherein the authentication information is a password.

4. The image processing apparatus according to any preceding claim, wherein the control means (110) is configured to delete job history stored in the storing means (8) based on a history storage time-limit information restricting the time during which the job history information is stored.

5. The image processing apparatus according to any preceding claim, further comprising
deleting means (110) for deleting the image data stored in the storing means based on a history storage time-limit during which the job history information is stored and/or based on a copy permission time-limit during which copying of a print product is permitted.

6. The image processing apparatus according to any preceding claim, wherein the determining means (110) is configured to determine whether the embedding management information of the print job selected by the selecting means (8) indicates that the copy restriction information indicating that copy of the output product output by said outputting means (6) is restricted to a predetermined number of output products, and
wherein the control means (110) is configured, if the determining means (110) determines that the embedding management information of the print job selected by the selecting means (7) indicates that the copy restriction information indicating that copy from the output product output by said outputting means (6) is restricted to said predetermined number of output products, to restrict said outputting means (6) from outputting the output product in accordance with the copy restriction information of the selected print job.

7. A method for controlling an image processing apparatus (1), the method comprising:
outputting, using an outputting means (6), an output product by executing a print job;
storing image data of the executed print job and job history information relating to the executed print job, wherein the job history information includes embedding management information indicating whether copy restriction information is embedded in the output product, and wherein the copy restriction information indicates whether copy from the output product is restricted;
displaying a user selectable list of previously executed print jobs based on the job history;
determining whether the embedding management information of the print job selected by a user from the displayed list of print jobs indicates that the copy restriction information is embedded in the output product; and
restricting, if it is determined that the embedding management information of the print job selected by the user indicates that the copy restriction information is embedded in the output product, the outputting means (6) from outputting an output product by re-executing the print job in accordance with the copy restriction information of the print job selected by the user.

8. A program which, when executed by a computer, causes the computer to carry out the method of claim 7.

9. A storage medium storing the computer program according to claim 8.

## Patentansprüche

1. Bildverarbeitungsvorrichtung (1), umfassend:
eine Ausgabeeinrichtung (6), die konfiguriert ist, ein Ausgabeprodukt durch Ausführen eines Druckauftrags auszugeben;
eine Speichereinrichtung (8), die konfiguriert ist, Bilddaten des ausgeführten Druckauftrags sowie Auftragsverlaufsinformation bezüglich des ausgeführten Druckauftrags zu speichern, wobei die Auftragsverlaufsinformation Einbettungsverwaltungsinformation enthält, die angibt, ob eine Kopierbeschränkungsinformation im Ausgabeprodukt eingebettet ist, und wobei die Kopierbeschränkungsinformation angibt, ob das Kopieren vom Ausgabeprodukt beschränkt ist;
eine Anzeigeeinrichtung (7) zum Anzeigen einer Liste über zuvor ausgeführte Druckaufträge basierend auf der durch die Speichereinrichtung (8) gespeicherten Auftragsverlaufsinformation;
eine Auswahleinrichtung (7) zum Auswählen zumindest eines zuvor ausgeführten Druckauftrags aus der auf der Anzeigeeinrichtung (7) angezeigten Liste über zuvor ausgeführte Druckaufträge;
eine Bestimmungseinrichtung (110) zum Bestimmen, ob die Einbettungsverwaltungsinformation des durch die Auswahleinrichtung (7) ausgewählten Druckauftrags angibt, dass die Kopierbeschränkungsinformation im Ausgabeprodukt eingebettet ist; und
eine Steuereinrichtung (110), die konfiguriert ist, falls die Bestimmungseinrichtung (110) bestimmt, dass die Einbettungsverwaltungsinformation des durch die Auswahleinrichtung (7) ausgewählten Druckauftrags angibt, dass die Kopierbeschränkungsinformation im Ausgabeprodukt eingebettet ist, durch erneutes Ausführen des Druckauftrags gemäß der Kopierbeschränkungsinformation des ausgewählten Druckauftrags die Ausgabeeinrichtung (6) in der Ausgabe eines Ausgabeprodukts zu beschränken.

2. Bildverarbeitungsvorrichtung nach Anspruch 1, ferner umfassend,
eine Empfangseinrichtung (7) zum Empfangen von durch einen Benutzer einzugebender Authentifizierungsinformation, falls die Bestimmungseinrichtung (110) bestimmt, dass die Einbettungsverwaltungsinformation des durch die Auswahleinrichtung (7) ausgewählten Druckauftrags angibt, dass die Kopierbeschränkungsinformation im Ausgabeprodukt eingebettet ist,
wobei die Steuerungseinrichtung (110) konfiguriert ist, falls die durch die Empfangseinrichtung (7) empfangene Authentifizierungsinformation der Authentifizierungsinformation entspricht, die in der Auftragsverlaufsinformation enthalten ist, die dem durch die Auswahleinrichtung (7) ausgewählten Druckauftrag zugeordnet ist, die Bildverarbeitungsvorrichtung gemäß der Kopierbeschränkungsinformation des ausgewählten Druckauftrags in der Ausgabe des Ausgabeprodukts zu beschränken.

3. Bildverarbeitungsvorrichtung nach Anspruch 2, wobei die Authentifizierungsinformation ein Passwort ist.

4. Bildverarbeitungsvorrichtung nach einem der vorangegangenen Ansprüche, wobei die Steuerungseinrichtung (110) konfiguriert ist, den in der Speichereinrichtung (8) gespeicherten Auftragsverlauf zu löschen, basierend auf einer Verlaufsspeicherzeitbegrenzungsinformation, die die Zeit beschränkt, während der die Auftragsverlaufsinformation gespeichert ist.

5. Bildverarbeitungsvorrichtung nach einem der vorangegangenen Ansprüche, ferner umfassend
eine Löschungseinrichtung (110) zum Löschen der in der Speichereinrichtung gespeicherten Bilddaten basierend auf einer Verlaufsspeicherzeitbegrenzung, während der die Auftragsverlaufsinformation gespeichert ist und/oder basierend auf einer Kopiererlaubniszeitbegrenzung, während der das Kopieren eines Druckprodukts erlaubt ist.

6. Bildverarbeitungsvorrichtung nach einem der vorangegangenen Ansprüche, wobei die Bestimmungseinrichtung (110) konfiguriert ist, zum Bestimmen, ob die Einbettungsverwaltungsinformation des durch die Auswahleinrichtung (8) ausgewählten Druckauftrags angibt, dass die Kopierbeschränkungsinformation, die angibt, dass Kopieren des durch die Ausgabeeinrichtung (6) ausgegebenen Ausgabeprodukts auf eine vorbestimmte Anzahl an Ausgabeprodukten beschränkt ist, und
wobei die Steuerungseinrichtung (110) konfiguriert ist, falls die Bestimmungseinrichtung (110) bestimmt, dass die Einbettungsverwaltungsinformation des durch die Auswahleinrichtung (7) ausgewählten Druckauftrags angibt, dass die Kopierbeschränkungsinformation, die angibt, dass Kopieren des durch die Ausgabeeinrichtung (6) ausgegebenen Ausgabeprodukts auf die vorbestimmte Anzahl an Ausgabeprodukten beschränkt ist, die Ausgabeeinrichtung (6) in der Ausgabe des Ausgabeprodukts gemäß der Kopierbeschränkungsinformation des ausgewählten Druckauftrags zu beschränken.

7. Verfahren zum Steuern einer Bildverarbeitungsvorrichtung (1), wobei das Verfahren umfasst:
Ausgeben, unter Verwendung einer Ausgabeeinrichtung (6), eines Ausgabeprodukts durch Ausführen eines Druckauftrags;
Speichern von Bilddaten des ausgeführten Druckauftrags sowie von Auftragsverlaufsinformation bezüglich des ausgeführten Druckauftrags, wobei die Auftragsverlaufsinformation Einbettungsverwaltungsinformation enthält, die angibt, ob eine Kopierbeschränkungsinformation im Ausgabeprodukt eingebettet ist, und wobei die Kopierbeschränkungsinformation angibt, ob das Kopieren vom Ausgabeprodukt beschränkt ist;
Anzeigen einer vom Benutzer auswählbaren Liste über zuvor ausgeführte Druckaufträge basierend auf dem Auftragsverlauf;
Bestimmen, ob die Einbettungsverwaltungsinformation des durch einen Benutzer aus der angezeigten Liste über Druckaufträge ausgewählten Druckauftrags angibt, dass die Kopierbeschränkungsinformation im Ausgabeprodukt eingebettet ist; und
falls bestimmt wird, dass die Einbettungsverwaltungsinformation des durch den Benutzer ausgewählten Druckauftrags angibt, dass die Kopierbeschränkungsinformation im Ausgabeprodukt eingebettet ist, Beschränken der Ausgabeeinrichtung (6) in der Ausgabe eines Ausgabeprodukts durch erneutes Ausführen des Druckauftrags gemäß der Kopierbeschränkungsinformation des durch den Benutzer ausgewählten Druckauftrags.

8. Programm, das bei Ausführung durch einen Computer diesen dazu veranlasst, das Verfahren nach Anspruch 7 durchzuführen.

9. Speichermedium, das das Computerprogramm nach Anspruch 8 speichert.

## Revendications

1. Appareil de traitement d'image (1), comprenant :
un moyen de délivrance (6) configuré pour délivrer un produit de délivrance par une exécution d'une tâche d'impression ;
un moyen de mémorisation (8) configuré pour mémoriser des données d'image de la tâche d'impression exécutée et des informations d'historique de tâches concernant la tâche d'impression exécutée, dans lequel les informations d'historique de tâches comprennent des informations de gestion d'incorporation indiquant si des informations de limitation de copie sont incorporées dans le produit de délivrance, et dans lequel les informations de limitation de copie indiquent si une copie du produit de délivrance est limitée ;
un moyen d'affichage (7) destiné à afficher une liste de tâches d'impression exécutées au préalable sur la base des informations d'historique de tâches mémorisées dans le moyen de mémorisation (8) ;
un moyen de sélection (7) destiné à sélectionner au moins une tâche d'impression exécutée au préalable dans la liste de tâches d'impression exécutées au préalable affichée sur le moyen d'affichage (7) ;
un moyen de détermination (110) destiné à déterminer si les informations de gestion d'incorporation de la tâche d'impression sélectionnée par le moyen de sélection (7) indiquent que les informations de limitation de copie sont incorporées dans le produit de délivrance ; et
un moyen de commande (110) configuré, si le moyen de détermination (110) détermine que les informations de gestion d'incorporation de la tâche d'impression sélectionnée par le moyen de sélection (7) indiquent que les informations de limitation de copie sont incorporées dans le produit de délivrance, pour limiter le moyen de délivrance (6) en ce qui concerne une délivrance d'un produit de délivrance par une nouvelle exécution de la tâche d'impression conformément aux informations de limitation de copie de la tâche d'impression sélectionnée.

2. Appareil de traitement d'image selon la revendication 1, comprenant en outre,
un moyen de réception (7) destiné à recevoir des informations d'authentification à entrer par un utilisateur si le moyen de détermination (110) détermine que les informations de gestion d'incorporation de la tâche d'impression sélectionnée par le moyen de sélection (7) indiquent que les informations de limitation de copie sont incorporées dans le produit de délivrance,
dans lequel le moyen de commande (110) est configuré, si les informations d'authentification reçues par le moyen de réception (7) correspondent aux informations d'authentification comprises dans les informations d'historique de tâches associées à la tâche d'impression sélectionnée par le moyen de sélection (7), pour limiter l'appareil de traitement d'image en ce qui concerne une délivrance du produit de délivrance conformément aux informations de limitation de copie de la tâche d'impression sélectionnée.

3. Appareil de traitement d'image selon la revendication 2, dans lequel les informations d'authentification sont un mot de passe.

4. Appareil de traitement d'image selon l'une quelconque des revendications précédentes, dans lequel le moyen de commande (110) est configuré pour supprimer un historique de tâches mémorisé dans le moyen de mémorisation (8) sur la base d'informations de limite dans le temps de mémorisation d'historique limitant le temps durant lequel sont mémorisées les informations d'historique de tâches.

5. Appareil de traitement d'image selon l'une quelconque des revendications précédentes, comprenant en outre
un moyen de suppression (110) destiné à supprimer les données d'image mémorisées dans le moyen de mémorisation sur la base d'une limite dans le temps de mémorisation d'historique durant laquelle les informations d'historique de tâches sont mémorisées et/ou sur la base d'une limite dans le temps d'autorisation de copie durant laquelle une copie d'un produit d'impression est autorisée.

6. Appareil de traitement d'image selon l'une quelconque des revendications précédentes, dans lequel le moyen de détermination (110) est configuré pour déterminer si les informations de gestion d'incorporation de la tâche d'impression sélectionnée par le moyen de sélection (8) indiquent que les informations de limitation de copie indiquant qu'une copie du produit de délivrance délivré par ledit moyen de délivrance (6) est limitée à un nombre prédéterminé de produits de sortie, et
dans lequel le moyen de commande (110) est configuré, si le moyen de détermination (110) détermine que les informations de gestion d'incorporation de la tâche d'impression sélectionnée par le moyen de sélection (7) indiquent que les informations de limitation de copie indiquant qu'une copie du produit de délivrance délivré par ledit moyen de délivrance (6) est limitée audit nombre prédéterminé de produits de délivrance, pour limiter ledit moyen de délivrance (6) en ce qui concerne une délivrance du produit de délivrance conformément aux informations de limitation de copie de la tâche d'impression sélectionnée.

7. Procédé de commande d'un appareil de traitement d'image (1), le procédé comprenant les étapes consistant à :
délivrer, au moyen d'un moyen de délivrance (6), un produit de délivrance par une exécution d'une tâche d'impression ;
mémoriser des données d'image de la tâche d'impression exécutée et des informations d'historique de tâches concernant la tâche d'impression exécutée, dans lequel les informations d'historique de tâches comprennent des informations de gestion d'incorporation indiquant si des informations de limitation de copie sont incorporées dans le produit de délivrance, et dans lequel les informations de limitation de copie indiquent si une copie du produit de délivrance est limitée ;
afficher une liste pouvant faire l'objet d'une sélection par un utilisateur de tâches d'impression exécutées au préalable sur la base de l'historique de tâches ;
déterminer si les informations de gestion d'incorporation de la tâche d'impression sélectionnée par un utilisateur dans la liste affichée de tâches d'impression indiquent que les informations de limitation de copie sont incorporées dans le produit de délivrance ; et
limiter, s'il est déterminé que les informations de gestion d'incorporation de la tâche d'impression sélectionnée par l'utilisateur indiquent que les informations de limitation de copie sont incorporées dans le produit de délivrance, le moyen de délivrance (6) en ce qui concerne une délivrance d'un produit de délivrance par une nouvelle exécution de la tâche d'impression conformément aux informations de limitation de copie de la tâche d'impression sélectionnée par l'utilisateur.

8. Programme qui, lorsqu'il est exécuté par un ordinateur, amène l'ordinateur à mettre en oeuvre le procédé selon la revendication 7.

9. Support d'informations contenant en mémoire le programme d'ordinateur selon la revendication 8.
